# EUROPEAN PATENT SPECIFICATION

(11) **EP 0 861 173 B1**
(45) Date of publication and mention of the grant of the patent: **02.06.1999**
(21) Application number: 96935103.0
(22) Date of filing: 30.10.1996
(51) Int. Cl.: B60S 9/205, B60G 17/015

(54) **VEHICLE PARKING DEVICE**
PARKEINRICHTUNG FÜR KRAFTFAHRZEUGE
DISPOSITIF CONCU POUR GARER UN VEHICULE

(30) Priority: 24.11.1995 GB 9524091
(43) Date of publication of application: 02.09.1998
(73) Proprietor: Statham, John, Arnold, Bathamton, Bath BA2 6SS (GB)
(72) Inventor: Statham, John, Arnold, Bathamton, Bath BA2 6SS (GB)
(86) International application number: GB9602632
(87) International publication number: WO9719839

(56) References cited:
- FR-A- 1 115 925
- GB-A- 2 145 674
- US-A- 2 862 567
- US-A- 4 779 895

## Description

### Field of the invention

This invention relates to means to aid the parking of a vehicle, more specifically it relates to apparatus which enables a vehicle to move laterally, that is, at right angles to the normal direction of travel (see, for example, US-A-2 862 567, corresponding to the preamble of claim 1.)

The invention also relates to a vehicle's damper having the features set forth in claim 15.

### Background of the invention

With the numbers of vehicles increasing each year the competition for parking spaces increases, and the ability to park in a short roadside parking space and to manoeuvre into that space easily is a great advantage. The method of moving a car laterally by bouncing manually has long been known and occasionally put into practice. It is almost unknown these days due to the changed car shape and the lack of the necessary manpower.

There have also been attempts to move vehicles laterally by mechanical means. The above-mentioned US Patent 2,862,567 discloses a method of using electric magnetic vibrators to cause the vehicle to vibrate vertically while diagonal arms (also with electric magnetic vibrators) are used to thrust the vehicle sideways. The method added extra weight, and took up considerable space in already constricted areas. It would require chassis design changes and many kilowatts of electricity to break the contact between the tyres and a rough road surface in order to attain lateral movement.

Many variations of shock absorber design have been suggested. US patent 4,779,895 shows an electro-hydraulic active suspension system which overcomes the friction forces to improve the vehicles's riding characteristics.

To overcome this growing parking problem the present invention provides apparatus which uses the power of the vehicle's engine to move the vehicle laterally, or, in fact, in any required horizontal direction, or to rotate it about a vertical axis.

Accordingly one object of the present invention is to provide the means for moving a vehicle laterally by non-manual methods. Another object is to provide means for moving a vehicle laterally by giving the frame of the vehicle an upward vertical acceleration in order to lift one or more pairs of wheels (or axles) clear of the road surface.

Another object is for the vehicle to have two modes of operation - a travelling mode, when the dampers act as shock absorbers, and a parking mode when the dampers act as bouncers and when a horizontal lateral force is provided to move the vehicle laterally while the wheels are temporarily clear of the road surface.

Another object is for the vehicle's vertical acceleration to be provided by an upward vertical force created by one, or more, hydraulic rams acting between the vehicle's wheel and frame.

Another object is for the hydraulic rams to be provided by adapting the vehicle's single function wheel dampers so that the dampers serve a dual function and provide the ram force to give the necessary upward vertical acceleration.

Another object is for the horizontal force which provides the means to move the vehicle laterally to be provided by one or more inclined struts pivoted to the underside of the body of the vehicle, the lower end being adapted to grip the road surface so that, as the vehicle falls to the ground the top end of the strut moves in a vertical circle about it's bottom end thereby causing the vehicle to move laterally.

Another object is for the energy required to produce the vertical acceleration to be provided by the power steering pump, often fitted to vehicles.

Another object is for the inclined struts to have collapsing or compressing means so that they do not exert large forces on the underside of the vehicle, and for each strut to give way as soon as the longitudinal load increases dramatically, and to return to its normal length when relieved of its heavy load.

Another object is for the vehicle's vertical acceleration and its lateral moving force to be co-ordinated, time-wise, to produce a repetitive bouncing cycle during which each bounce achieves a small lateral incremental advance in the required direction.

Another object is for the second function of the single or double tube damper to be achieved by providing a feed route for the hydraulic pressure fluid's entrance into the damper's lower chamber, an escape route for its escape from the upper chamber, and a blocking device to prevent the fluid passing through the holes in the damper's piston used in the damper's travelling mode.

Another object is for the solid piston rod of the single-function damper to be replaced in its dual-function form by two hollow coaxial piston pipes which provide the flow routes for the hydraulic fluid supply to the hydraulic ram.

Another object is that the dual-function damper fits into the space normally occupied by the single-function damper which it replaces, and where this is not possible, that it occupies a minimum of extra space.

Another object is to have the capacity, when required, to push the vehicle not only transversely but rotationally.

Another object is to push the vehicle, during the bounce process, with one or two multi-directional struts which will give a horizontal thrust in any required direction, and rotation.

Another object is that the piston rod of the dual-function damper be attached to the vehicle frame by a single screwed nut which is concentric with the vertical axis of the damper.

Another object is to minimise the height of the bounce and increase its frequency by distributing the hydraulic fluid, not by slow reciprocating valves, but by fast motorised, rotating, linked, switch valves.

Another object is for the damper's upper chamber to be pressurised as the vehicle's frame descends so that the wheel is raised in relation to the frame and the length of time the wheel is clear of the road surface is extended. This, in effect, can lead to a lower bounce height and a shorter bounce frequency, which is an object of this invention.

Another object is for the blocking device of the escape routes from the lower damper chamber to be provided automatically by a thin elastic tube with a restricted lower orifice which expands radially to block the holes through the damper's piston by which the fluid escapes in the travelling mode.

Another object is for the blocking device of the escape routes from the upper damper chamber to be provided automatically by an annular cut-off sleeve which slides up and down in the annular space and is supported by a coil spring, and for the fluid pressure in the parking mode to force the sleeve down against the spring to block the routes through the piston by which the fluid escapes in the travelling mode.

A final object is to provide controls so that the dual-function damper can be changed from its shock absorbing function to its bouncing function and vice versa depending on the mode in which it is required to operate.

### Summary of the invention

To attain these and other objects the present invention (as defined in independent claim 1) overcomes some of the present parking difficulties by providing a device to enable a vehicle which has at least two modes of operation - a travel mode and a parking mode, to be moved horizontally sideways; and which vehicle has bouncing means, horizontal thrust means, energising means, and control means, in which device the bouncing means is achieved by adapting two or more of the vehicles dampers to perform a second function in the parking mode in addition to the damper's normal and first function of absorbing the vertical shocks as the vehicle travels over a bumpy road surface in the travel mode of operation; - the bouncing being achieved by converting each affected damper into an hydraulic ram to give the vehicle upward acceleration in order to bounce at least two of the vehicles wheels clear of the road surface, together with lateral movement struts which move the vehicle laterally during the period when the wheels have no contact with the road surface.

By using a vehicle's dampers to lift the wheels clear of the ground dynamically and by utilising the hydraulic fluid power provided by a vehicle's power steering pump to energise the lifting process the main objects of the invention will have been achieved at very little expense. Normally a vehicle's dampers only have one function - that of damping down the violent vertical accelerations of the wheel and absorbing the vertical shocks. Modern dampers are single function, and most dampers are telescopic and are generally of one of two types, - single or double tube. A second damper function, which is one of the main objects of this invention, - that of using the damper to bounce the wheel tread clear of the road surface - can be achieved with either type. It consists basically of applying fluid pressure to the lower chamber of the damper, of providing an escape for the fluid trapped in the upper chamber, and of preventing the fluid from passing through the vertical holes in the damper's piston, to produce vertical acceleration.

The normally solid piston rod is conveniently replaced by two hollow concentric pipes. The inner pipe is adapted to carry the hydraulic pressure fluid to the lower chamber of the damper while the annular space between the two concentric pipes is adapted to provide the escape route for the return fluid in the upper chamber.

A restricting throat is provided as the inner pipe passes through the piston, which results in a pressure differential which is used to expand a thin elastic tube radially and horizontally outwards so that it blocks holes through the piston which normally allow fluid to escape upwards from the lower chamber. The escape fluid is led back to a vented hydraulic fluid reservoir from where it is re-circulated by the hydraulic pressure fluid pump.

The dual function damper thus has two modes of operation. In its normal, traveling, mode it acts as a shock-absorber between the wheel and the vehicle's frame, but in its parking mode it acts as a hydraulic ram to accelerate the vehicle vertically so that the tread of the wheel's tyre is clear of the road surface intermittently. These two modes are quite separate because the parking (lateral movement) function is never required while the vehicle is in its traveling mode.

In a simple example of the invention the damper, adapted to provide the hydraulic ram function between the vehicle's wheel and it's frame is energised by high pressure hydraulic fluid flowing into the dampers' lower chamber which accelerates the vehicles frame, vertically upwards, until sufficient acceleration has been achieved to lift the tyre clear of the road surface The frame has then reached its required upward velocity. After that the hydraulic power is diverted from the lower chamber, but the frame continues to travel upwards until, decelerated by gravity, it slows, stops, and then starts its descent. When the tyre again hits the road surface it is deformed together with the coil spring which, with the damper, is part of the wheel suspension system. The tyre and spring recover and, in doing so, force the vehicle's frame upwards again. At this point the hydraulic power is re-applied to the dampers lower chamber and the bounce cycle is repeated.

For lateral movement it is necessary to apply a horizontal force when the tyres of a pair of wheels lose contact with the road surface. The horizontal thrust is provided by a telescopically shortening strut. Two struts are normally required to push in either of two opposing directions, (towards and away from the kerb).

One end of the telescopic strut is pivoted to the underside of the vehicle's body at a convenient place. The other, remote, end (which is called the foot) is normally held up so that the strut is in a basically horizontal position clear of the road surface when not in use.

To deploy the strut the foot is lowered to make contact with the road surface. The length of the strut is arranged so that when the vehicle's body is at the top-of its bounce the strut makes an angle of about 65° with the horizontal.

The foot of the strut is made so that it will grip the road surface either by having a high friction elastic surface or by penetrating the road surface with points, or blades, or pointed blades.

As the vehicle bounces upward the foot of the strut is dragged along the road surface until the vehicle reaches the top of its bounce. As the vehicle then descends the foot of the strut grips the road surface and the top of the strut describes an arc about the foot pushing the vehicle laterally until the tread of the tyre grips the road surface as the vehicle falls back to the ground. At this point the load in the strut increases dramatically and the strut automatically contracts against an axial spring. When the vehicle body has fallen back to its normal level the strut is restored to it normal length by the axial spring. Alternatively each pair of handed struts could be replaced by a single hydraulically controlled similar strut rotating through 360 ° in a horizontal plane around a vertical axis. Two of these struts, mounted fore and aft on, or near, the vehicles longitudinal centre line could push the vehicle in any desired horizontal direction when the bounce cycle operates; or one such strut mounted at the vehicles centre of gravity could achieve the same result. The spring has to be prestressed in the strut's unloaded condition, - the prestress axial force in this condition must be the load which the strut carries just before the dramatic load increase, - so that, in its working mode, the strut will shed the load as soon as it begins to increase dramatically, by shortening.

In some cases the high pressure hydraulic pump fitted to certain vehicles to energise the power steering will not have sufficient power to produce the necessary bounce height, frequency and control. To overcome this problem it will be necessary either to fit a suitable hydro-pneumatic accumulator in the hydraulic circuit or to fit a larger or higher pressure hydraulic pump.

It is soon apparent that to improve the efficiency of the bounce the hydraulic fluid pressure must not only be applied to the lower damper chamber, but also, subsequently, to the upper damper chamber.

The means of supplying the high pressure hydraulic fluid to the lower and upper damper chambers of a dual-function damper, of conveying the return fluid back to the hydraulic fluid reservoir, and of preventing hydraulic fluid from escaping through the piston during the parking mode when the damper acts as a double acting hydraulic ram is an important part of this invention.

The hydraulic pressure fluid is fed into the lower chamber through the hollow inner pipe of the two-pipe piston rod. When the piston moves upwards the fluid which is displaced from the annular space above the piston (which is the upper chamber) is allowed to escape into the annular space between the inner and outer piston pipes from where it is returned to the hydraulic fluid reservoir. The pressure fluid, which, in the traveling mode, escapes from the lower damper chamber (through holes in the piston) is prevented from doing so, in the parking mode, by a thin walled elastic blocking tube with a restricted lower end through which the pressure fluid flows. The restriction increases the fluid pressure locally, which expands the elastic blocking tube, which blocks the fluid escape holes, which allows the damper to act as a hydraulic ram. In the traveling mode there is no flow of pressure fluid through the elastic tube, so that the fluid pressure does not increase locally, and the elastic tube does not expand and so it does not block the escape holes; so that the damper, in the traveling mode, acts as a shock absorber and not a hydraulic ram.

The damper forms a tie between the wheel and the frame, so, once the required vertical lift - off velocity has been achieved by rapidly expanding the telescopic damper, it is advantageous to rapidly contract the damper to lift the wheel further off the road surface. This is achieved by forcing fluid into the upper chamber of the damper (to overcome the weight of the wheel and the force of the suspension coil spring) and, at the same time to force the fluid in the lower damper chamber to return to the hydraulic fluid reservoir.

The most acceptable lateral movement is when the bounce height is small and the bounce frequency is short. To achieve a short frequency the hydraulic fluid control valves should be rotating and not reciprocating.

A good method of controlling the bounce cycle, then, is by linked, motorised, twin, rotary, switch valves consisting basically of stators and rotors. These valves are best linked by being on the same drive shaft. The hydraulic fluid enters through the centre of the rotating rotor of the first valve into a radial duct which engages with circumferential ducts in the, stationary, stator. During one revolution the radial duct of the rotor sequentially engages a major sector, a blank sector, and a minor sector. The major sector of the first valve is connected to the lower chambers of the relevant dampers, the blank sector blocks the flow of the fluid, and the minor sector is connected to the upper chambers.

The hydraulic fluid enters the second (twin) valve through the major and minor sectors of the stator and flows out through the centre of the rotor. It flows into the major sector from the upper chambers and into the minor sector from the lower chambers. The central rotor out-flow returns the fluid to the hydraulic fluid reservoir.

The rotary velocity of the drive motor of the rotary twin valves is preferably adjustable.

To change the vehicle from travelling mode to parking mode a solenoid operated valve on the return floe line is opened, the drive of the twin rotary switch valves is energised, the mode valve is switched from traveling mode to parking mode, and the relevant strut or struts are lowered to the road surface. To change back to travelling mode the sequence of operations is reversed.

Finally, this invention relates to a two-mode vehicle equipped with bouncing means, horizonal thrust means, and control means:-
◆ Bouncing means is achieved by the dampers being dual-function, the second function being achieved by making the damper act as a hydraulic ram to cause the vehicle to accelerate vertically in the parking mode of operation and the tyre to leave the road surface.
◆ The ram is energised by hydraulic fluid supplied through the hollow piston rod which is composed of two concentric pipes.
◆ The ram action is achieved by automatically blocking the fluid escape holes through the piston during bouncing.
◆ The fluid is prevented from escaping upwards, through the piston, by a thin elastic tube with a restricted lower orifice which is suspended within the inner piston pipe.
◆ When the ram is double-acting the fluid is prevented from escaping downwards, through the piston, by a spring-supported cut-off sleeve within the annular space between the inner and outer piston pipes.
◆ The top of the dual-function damper is secured to the vehicle frame by a single central damper-securing nut.
◆ Horizontal thrust means is provided by one (or more) retractable struts with one end pivoted to the underside of the vehicle. The strut is telescopic and is prestressed with a longitudinal spring.
◆ The strut is deployed by the remote end being lowered to the road surface at an inclined angle.
◆ The remote end of the strut has a broad flat surface with points to grip the road surface.
◆ The strut can be made to rotate about a vertical axis so as to be able to push in any required horizontal direction.
◆ Deployment and rotation of the strut can be accomplished hydraulically.
◆ The control means is achieved by pressure and return hydraulic fluid being distributed sequentially to the dampers to control the vehicle's bounce height and bounce frequency.
◆ The sequential fluid distribution is accomplished by twin, motorised, rotating, linked switch valves.

### Description of the drawings

- Fig. 1: shows, diagrammatically, a vehicle wheel suspension arrangement adapted to dual function.
- Fig. 2: shows a vertical cross - section through half of the piston of a dual-function double tube damper.
- Fig. 3: shows a part plan on the top of the piston shown in Fig. 2.
- Fig. 4: shows an elevation of a spring loaded telescopic strut in its stowed and working attitudes.
- Fig. 5: shows a cross section through the top assembly of the damper (shown in Fig. 1) in more detail.
- Fig. 6: shows a simplified plan on the top assembly of the damper shown in Fig. 5.
- Fig. 7: shows the arrangement of the hydraulic circuits.
- Fig. 8: shows a hydraulically controlled rotary, multi-directional , telescopic strut.

For simplicity and clarity many parts of the drawings are shown schematically.

### Detailed description of a preferred embodiment

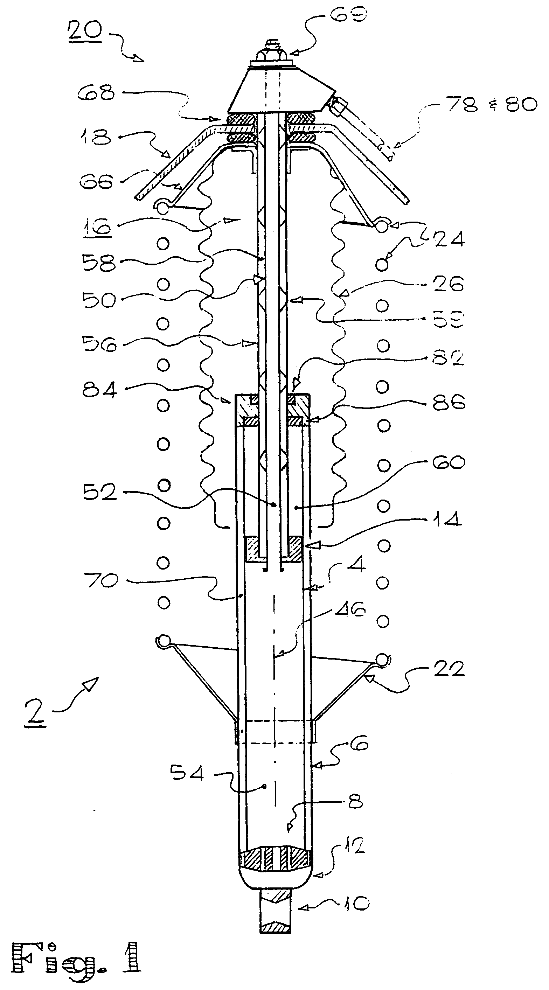

Referring to the drawings, Fig. 1 shows the single-function, double tube, damper adapted to a dual-function damper, - the second function being to act as a hydraulic ram and cause the wheel of the vehicle to bounce clear of the road surface, and return quickly.

The typical much-used single-function double - tube telescopic damper, 2, is composed of a damper tube, 4, surrounded by an outer tube, 6, both of which are attached to a fixing eye, 10, which is attached to the wheel of the vehicle. A foot valve assembly, 8, controls the flow of damper fluid between the damper's lower chamber, 54, and the reservoir annular space, 70. Sliding within the damper tube is the damper piston, 14, which is secured to the lower end of a piston rod, 16. The top end of the piston rod is attached to the vehicle frame, 18, by a top assembly, 20. A lower spring support plate, 22, is attached to the outer tube and a wheel suspension coil spring, 24, operates between the lower support plate and the upper spring support plate, 66, which is part of the top assembly. A gaiter, 26, is attached to the top assembly to protect the exposed section of the piston rod.

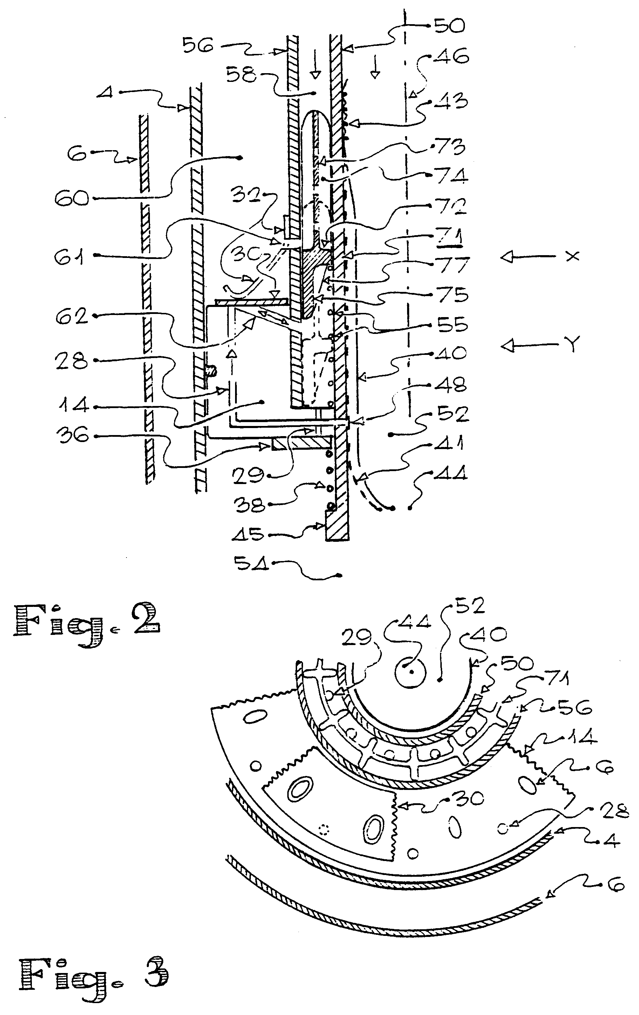

The piston has a number of sets of escape holes drilled through it. The L shaped holes, 28 Figs 2 and 3, are covered by the upper disc valve, 30, held down by a star shaped disc spring, 32. These holes allow fluid to escape from the lower chamber of the damper in the traveling mode. A set of short vertical holes, 29, connect the lower chamber, 54, to the upper chamber, 60, by way of the inclined holes, 62. Inclined holes, 62, are not obstructed by the upper disc valve, 30, which is perforated locally to avoid obstruction.

Damping is effected by the damper piston forcing the hydraulic damper fluid through the L shaped holes at a high velocity when the telescopic damper is compressed as the vehicle travels along a bumpy surface. This is the normal function of the single-function damper which has a solid piston rod and is widely used on all types of vehicles.

But the damper shown on Figs. 1, 2, and 3, has a second function which is to act as a hydraulic ram during the parking mode procedure (when it is not required to act as a damper). This hydraulic ram acts, as does the damper, between the road wheel and the vehicle frame and must have the power to accelerate the vehicle frame so that the frame is propelled vertically upwards and only stops when it has lifted the wheel clear of the road surface.

This second function is achieved by having a hollow (not solid) piston rod which is composed of two concentric pipes. The inner pipe, 50, conveys high pressure hydraulic fluid through its bore, 52, from the top assembly to and from the lower damper chamber, 54; while the outer pipe, 56, conveys the fluid, through the annular space, 58, to and from the upper chamber annular space, 60, above the outer part of the piston, back to the top assembly.

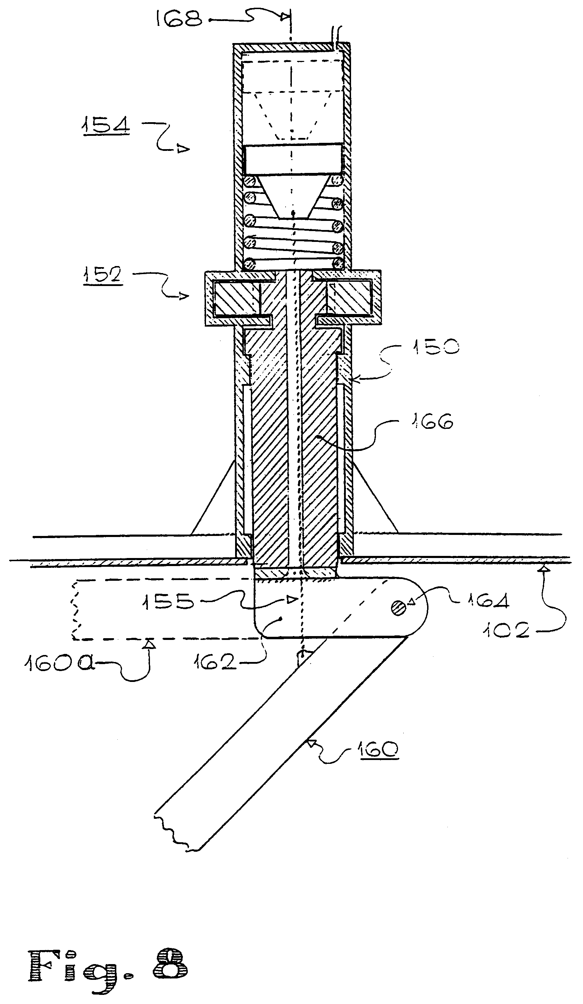

The top assembly, 20, Fig. 1, 5, and 6, collects the pressure and return fluids separately and provides hose connections to complete the hydraulic circuits to the hydraulic pressure pump, 88, and the reservoir, 90, respectively, Fig 7. Between the hydraulic pressure pump and the top assembly a non-return valve, 92, is inserted in the pressure line while a solenoid controlled shut-off valve, 93, is inserted in the return line so that the hydraulic circuit of the second function will be closed when the vehicle is in its traveling mode. There is also a solenoid controlled pressure relief valve, 149, in the return fluid line which has to relieve the high pressure in the parking circuits as soon as the mode is changed to the travelling mode.

As the hydraulic pump will be running continually while the vehicle's engine is running, another pressure controlled relief valve, 94, has to be inserted next to the pump. This relief valve will serve both the steering and parking ram functions which occur at different times.

To enable the damper to perform its second (ram) function, of lifting and accelerating the vehicle, the high pressure hydraulic fluid must not be allowed to escape from the lower damper chamber during lifting.

To achieve this situation the piston, 14, Fig. 2 and 3, is rigidly attached to the lower ends of both the inner and outer piston pipes, and the piston is so shaped that the bore of the inner piston pipe extends through the piston to enable the hydraulic pressure fluid to reach the lower damper chamber, 54.

The holes, 28, through which the hydraulic fluid escapes from the lower chamber in the traveling mode are L shaped and their lower ends emerge, conveniently and horizontally, into the lower inner piston pipe bore. A thin-walled, elastic, blocking tube, 40, is suspended within the inner piston pipe by a radially expanding coil spring, 43. The lower end, 44, of the blocking tube is designed to restrict the downward flow of the pressure fluid so as to cause the fluid pressure to rise locally and expand the elastic blocking tube horizontally and radially, to position, 41, so that it blocks the escape holes, 28, at their lower ends, 48. The inner piston pipe is extended downwards and has an external rim, 45, which supports the coil spring, 38, of the lower disc valve, 36.

The outer tube, damper tube, piston, outer piston pipe, inner piston pipe, heavy suspension coil spring, gaiter, spring support plate, elastic blocking tube, and damper securing nut are all concentric about the vertical axis of the damper, 46.

In the parking mode the hydraulic pressure fluid flows down the elastic blocking tube within the inner piston pipe, is restricted by the restriction of its lower end, expands horizontally and radially, and, in doing so, blocks the lower ends of the lower chamber fluid escape holes. The pressure fluid continues down into the lower damper chamber from which it cannot now escape, so that the damper acts as a hydraulic ram raising the piston and lifting the vehicle frame.

Inclined holes, 62, are provided through the piston so that the hydraulic fluid can pass between the annular space, 60, above the piston (the upper damper chamber), and the return fluid annular space, 58.

In the parking mode, when the frame begins its descent, (in the bounce cycle) the hydraulic pressure fluid is forced into the upper chamber to contract the telescopic damper, in which process it is aided (once the tyre touches the road surface) by the weight of the frame but opposed by the coil spring force. The fluid in the lower chamber rises up the inner piston bore and is returned to the hydraulic fluid reservoir via the twin rotary control switch valves.

When the upper chamber is pressurised in the parking mode it is necessary to prevent fluid from escaping through the inclined holes, 62, as it does in the traveling mode. This is done by providing a circular plastic cut-off sleeve, 71, which slides up and down in the annular space, 58, between the inner and outer piston pipes. The plastic sleeve is supported, (in the annular space) by a coil spring, 55. In order not to jam in the annular space the height of the sleeve has to be roughly about the internal diameter of the outer piston pipe. In the travelling mode the coil spring forces the sleeve upwards, to position X, so that fluid can escape from the upper chamber, 60, through the inclined escape holes, 62, down the lower escape holes, 29, past the lower disc valve, 36, and into the lower chamber.

But in the parking mode the hydraulic fluid traveling down the annular space, 58, forces the plastic sleeve down (compressing the coil spring) until the sleeve blocks the flow of fluid through the lower escape holes, 29, (position Y) but allows the fluid to flow down the annular space, 58, up through the inclined escape ducts, 62, and into the upper chamber, 60. For the cut-off sleeve to work effectively the inclined escape ducts, 62, must restrict the passage of hydraulic fluid much more than the access holes, 61, do.

The top two thirds of the plastic blocking sleeve consists of a central perforated wall, 73, through which fluid can pass, and slide ribs, 74, which fit comfortably in the annular space. The bottom third has an inverted L section with a vertical cut off wall, 75, a top horizontal, well fitting, block, 72, and inward facing ribs, 77, so that it slides in the annular space and blocks fluid entry into the lower escape holes, 29, when the sleeve is forced down into its blocking position, Y.

In the traveling mode the high pressure fluid lines to and from the damper are blocked by valves. When the damper is compressed by a violent road surface hump the hydraulic fluid flows up through the L shaped, escape holes at a high velocity unrestricted by the thin elastic tube but restricted by the upper disc valve. As the damper expands again, under the heavy coil spring, 24, reaction, the hydraulic fluid flows downwards through the inclined escape holes and the lower escape holes restricted by the lower disc valve and the disc valve coil spring. This traveling mode behaviour is practically the same as the normal behaviour of all single function dampers.

The damper is attached to the vehicle's frame by a single central damper securing nut, 69, Figs. 1, 5 and 6 screwed onto the top end of the inner piston pipe. The outer pipe of the piston rod fits through a circular opening in the frame plate, 18, so that the frame plate is squeezed between the upper spring support plate, 66, (which is secured to the outer piston pipe) and the top assembly block, 64, cushioned by two substantial seating washers, 68. Tightening the nut secures the top of the damper to the vehicles frame.

The piston rod inner and outer pipes are both secured to the piston and are located axially by the top assembly, and by spacers, 59.

When the piston rises in the damper cylinder in the parking mode (to extend the damper) the fluid in the annular space above the piston has to escape. It does this through the ring of escape holes, 61, provided through the wall of the outer piston pipe. This fluid then flows upwards in the annular space between the inner and outer pipes which form the piston rod. It becomes the return fluid and is collected by the top assembly and led, via the fluid hose connection, 78, back to the hydraulic fluid reservoir. The top assembly also has a pressure fluid hose connection, 80, which connects with the bore of the inner piston pipe, Figs. 1, 3, 5 and 6.

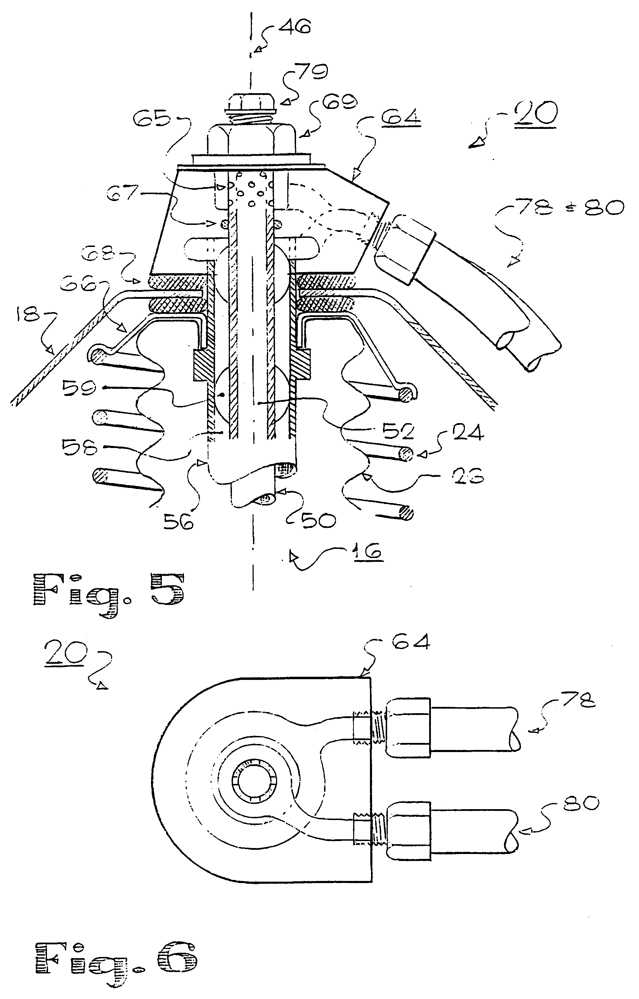

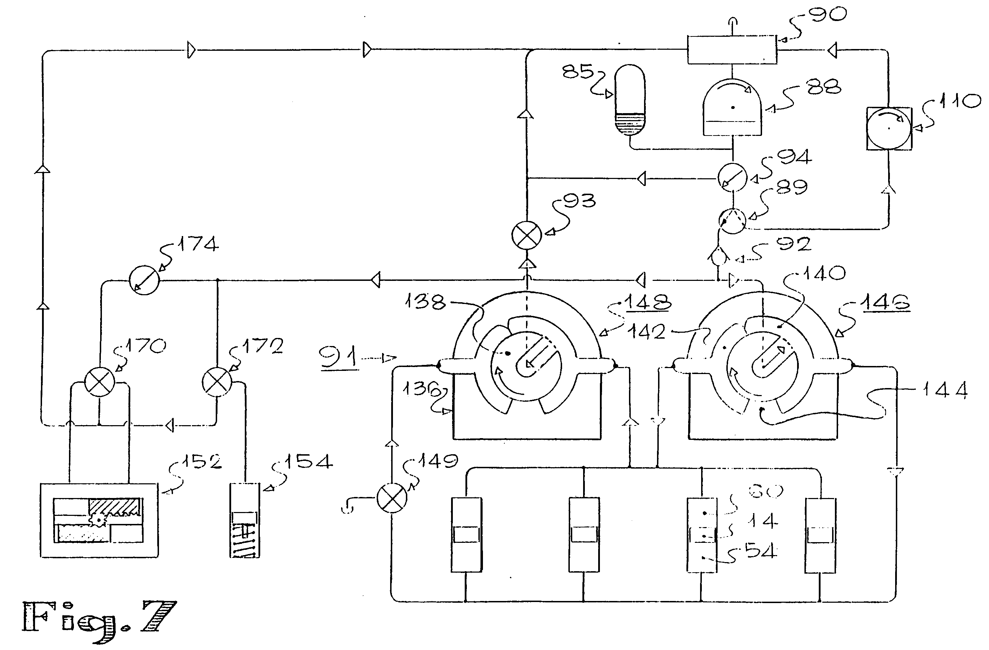

The top assembly, 20 Figs 5 and 6, is an important part of the invention as it provides a compact design by which pressure fluid can successively feed the double acting hydraulic cylinder which the damper becomes in the parking mode of operation. From the fluid supply connection, 80, the fluid flows into the top assembly block, 64, through perforations, 65, in the top of the inner piston pipe, down the bore of that pipe, and through the thin-walled elastic blocking tube into the bottom chamber of the damper, from where it returns by the same route. An elastic seal, 67, prevents leakage, and the open top end of the inner piston pipe is blanked off with a male screw plug, 79, or simply sealed with a fixed end plate.

From the other fluid supply connection, 78, the fluid flows into the assembly block, 64, and down the annular space, 58, between the inner and outer piston pipes. It pushes down the cut-off sleeve, 71 Fig 2, from position X to position Y and enters the top chamber of the damper through the fluid access holes, 61, and the inclined piston escape holes, 62. When the cut-off sleeve reaches position Y (against the resistance of the coil spring 55) it can descend no further and blocks the annular space preventing fluid escaping through escape holes, 29.

When the lower damper chamber is pressurised the fluid returns from the upper damper chamber by flowing through fluid access holes, 61, into the annular space between the inner and outer piston pipes and back to fluid supply connection, 80, through the second twin switch valve, 148, Fig 7, and back to the reservoir.

Also provided is a gland, 82, Fig. 1, around the outer piston pipe as it emerges through the damper head, 84, and a rubber cushion, 86, to soften the blow if the piston reaches the top of its vertical movement.

A dual-function damper is provided at each wheel where lateral movement is required, normally either the back wheels or both front and back wheels of a four wheeled vehicle.

The hydraulic pressure fluid has to be controlled so that the pressure is applied intermittently and cyclicly to the relevant pair of wheels to cause them to bounce the vehicle up into the air so that the tyres are clear of the road surface repetitively, like a skipper with a skipping rope. To achieve this motion the hydraulic pressure has to be applied to each lower damper chamber until the desired vertical velocity has been achieved.

The basic hydraulic circuit is shown in Fig. 7. Hydraulic fluid is led from the reservoir, 90, to the hydraulic pump, 88, where the hydraulic fluid pressure is increased. From the pump the fluid flows to the mode change valve, 89, where it is directed either to the power steering motor, 110, or to the lateral parking system, where it flows into a (twin) motorised rotating switch valve, 91, which either blocks the flow or sends it to either the upper, or lower chamber of the damper, and, at the same time directs the return fluid to flow back to the reservoir. This switch valve is in effect, two rotating (twin) valves mounted on the same drive shaft and driven by a motor so that each revolution constitutes a cycle of events which causes the bounce cycle of the relevant wheels of the vehicle. The rate of rotation of the twin switch valve determines (with other variables) wheel bounce height and frequency. Slow rotation will cause slow, high, bouncing, while fast rotation will cause fast, low, bouncing.

The basic hydraulic circuit also incorporates a hydro-pneumatic accumulator, 85, (which may be necessary to conserve power usefully), a pressure relief valve, 94, (as the hydraulic pump will work continually when the vehicle's engine is running), a non-return valve, 92, on the pressure line, and a solenoid operated valve, 93, on the return line which must block the return fluid when the vehicle is in traveling mode. A solenoid operated pressure relief valve, 149, will also be required (operated in the travelling mode only) to relieve pressure in the damper chambers when the parking system is operated at a high hydraulic pressure.

Each twin switch valve has two main parts, the stator, 136, and the rotor, 138. The relative size of stator segments of the two identical valves is very important. The major segment, 140, which pressurises the lower chambers of the dampers is likely to be about 280 °^{.} While the minor segment, 142, which pressurises the upper chambers will likely be about 75 °, and the blank segment, 144, which blocks the hydraulic flow will be the residue of 5 ° or less, but these will depend on specific cases, and could vary greatly.

The diagram of the motorised, rotating, twin, switch valves is intended to show (Fig. 7) that the pressure fluid is led into the centre of the moving rotor of the first twin, 146, and is directed sequentially into the two stator segments, from where it flows into the dampers. From the dampers the return fluid flows into the stators of the second twin, 148, from where it flows sequentially into the rotor and back to the reservoir.

The second function of the dual-function damper provides the bounce for the wheels to leave the road surface. During the time that the pair of wheels are both clear of the road surface a lateral force has to be applied to move the vehicle frame transversely; that is sideways.

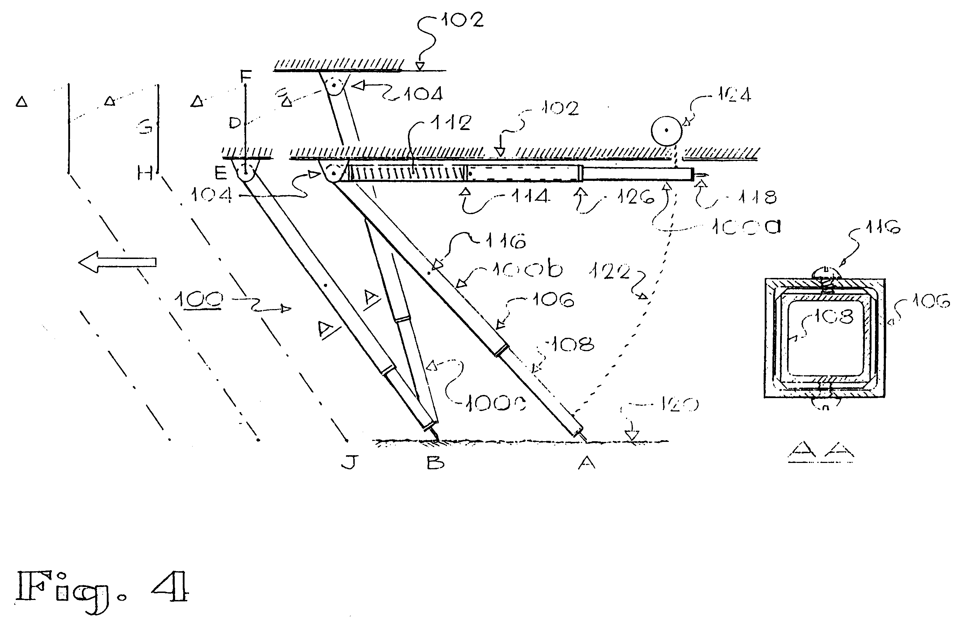

The easiest way to move the vehicle sideways, that is laterally, is by an inclined telescopic strut, 100, Fig. 4, attached transversely to the underside, 102, of the vehicle, preferably close to the bumper (or fender) at a pivot, 104.

The strut is made up of two main parts, the casing, 106, and the extension, 108, which is adapted to slide within the casing. The casing is attached to the pivot by a pivot pin, and a coil spring, 112, within the casing, bears onto the extension head plate, 114, and forces the extension longitudinally away from the pivot and against two stop screws, 116. A guide plate, 126, is attached to the remote end of the casing. The extension has a spade foot, 118, with a saw tooth edge at its remote end, which is designed to grip the road surface, 120.

In its stowed position the telescopic strut is carried in a horizontal attitude, transversely across the vehicle, supported at the pivot and by a lanyard, 122, attached to the extension near the foot. The lanyard is controlled by a small winch, 124.

To deploy the telescopic strut the winch lowers the strut foot from its stowed, horizontal, attitude, 100a, to an inclined attitude, 100b, with its foot on the road surface. Then, when bouncing starts, the vehicle frame is raised and the pivot raises the strut to a steeply inclined attitude, 100c, the foot having been dragged forward from position A to position B.

As the vehicle then descends the pivot end of the strut describes an arc C about the foot until the critical strut load is reached at point D when the telescopic strut contracts and the pivot descends to point E to complete the first bounce cycle. The second bounce cycle takes the pivot to points F, G, and H with the strut foot being dragged from position B to position J, and so on.

Finally when the bouncing stops the strut will be raised back to its horizontal, stowed, position by its winch,

Non-rotating struts are installed transversely in handed pairs, thus, to move the vehicle in the opposite direction the opposite handed strut is deployed. Bouncing will then move the vehicle laterally in the opposite direction to that shown in Fig. 4.

The strength of the strut coil spring has to be chosen carefully. The strut has to be prestressed and left in a state of longitudinal stress such that it carries a load equal to that load which will occur in the strut just before the load rises dramatically as the tyre tread grips the road surface.

A hydraulically controlled. rotating, multi-directional, telescopic strut, 160, Fig. 8, is pivoted to the end of a bracket, 162, at a pivot, 164.

The bracket is rigidly attached to a cylinder, 166, mounted with a vertical axis, 168, in a housing, 150, which is fixed to some part of the vehicle's frame, in such a way that the cylinder can rotate about its axis and is vertically supported.

A double-piston, semi-rotary, hydraulic actuator, 152, is fixed above the housing so that it can rotate the cylinder through 360° and back.

A single-acting, spring-return, hydraulic ram, 154, is mounted on the cylinder's vertical axis above the actuator so that, when pressurised , the piston of the ram, which is attached to the strut by a cable, 155, passing axially through the cylinder, releases the strut which falls until its foot rests on the road surface, from where it is raised to its horizontal, stowed position, 160a, by the ram spring, when the pressure is released.

The telescopic strut, 160, is (similar to that shown in Fig 4) axially spring-loaded, and pre-stressed, and has a foot adapted to grip the road surface. It is mounted in such a way that, when stowed, as little as possible protrudes below the under surface, 102, of the vehicle.

Hydraulically-controlled, rotary, multi-directional, telescopic, struts are best mounted on the vehicle's longitudinal centre line at the front and rear of the vehicle, where they can be deployed to push the vehicle in any horizontal direction during the bounce process.

The length of the dual-function damper described will be very similar to the single function damper it replaces but its diameter will be slightly larger. Although one much-used type of single function damper has been shown in the drawings many different types of telescopic dampers can be adapted to a dual function in a similar manner.

Although hydraulically controlled, rotary, multi-directional, telescopic struts would usually be installed in pairs, Fig. 7 shows only a single strut for simplicity. Pressure fluid is applied to the single acting spring-return hydraulic ram, 154, through a direction control valve, 172; whereas the double-piston rotary hydraulic actuator, 152, has to be controlled by a throttle, 174, to slow down the rotary movement, and a direction control valve, 170, to change from clockwise to anti-clockwise movement, and vice versa.

Given the wheel loading, the tyre distortion under loading, and the damper movement, the required clearance under the tyre at the bounce can be estimated and, applying Newton's laws of motion, the acceleration, ram force, and lift time can be calculated for a particular case from which the required hydraulic pressure, power, flow rate, and cycle time can be obtained.

The hydro-pneumatic accumulator, 85, shown on Fig. 7, will only be necessary when the power steering hydraulic fluid pump performance is inadequate to power the bouncing cycle.

One method of parking is to run the vehicle into the parking space in the travelling mode so that a front wheel ends up close to the kerb and the vehicle's longitudinal centre line is at an angle to the kerb. With the engine still running the appropriate strut is deployed and the vehicle is switched to its parking mode whereupon the rear wheels start bouncing and moving laterally towards the kerb. When the appropriate tyre makes contact with the kerb the vehicle is parked.

The method of moving out from a parked position is the reverse of the above detailed procedure. With the vehicle in the parking mode the engine is started and the appropriate strut is deployed for outward movement whereupon the rear of the vehicle starts to bounce and move laterally. When the vehicle's rear is sufficiently far from the kerb the mode is switched to traveling, the strut is stowed and the vehicle can be driven out of the parking space in practically the same tracks as it entered.

If all four (or more) wheels of a vehicle are fitted with dual-function dampers the vehicle can stop opposite the parking space and parallel to the kerb, then bounce laterally into the kerb; it can also rotate about a vertical axis if the front and rear struts are set to move the vehicle horizontally in opposite directions.

There are many ways of operating the parking method, many parts of which can be done automatically. For instance it could be arranged that all the driver need do is to stop the vehicle in the appropriate position and indicate which pair (or pairs) of wheels has to move in which direction. Then the driver can change the mode to parking and, with the engine running, wait until the vehicle has attained the required position automatically and electronically.

There are many applications of this lateral movement technique apart from its obvious use for street parking. It can be used to accurately reposition vehicles or aircraft laterally, longitudinally, and rotationally wherever road, floor, deck, or apron area is at a premium. In some cases the required small horizontal thrust could be supplied by manpower or by a small vehicle.

Where a vehicle or aircraft has very soft bouncy tyres or suffers from other difficulties it may be necessary to provide a retractable or portable strut between the wheel axle and the road surface.

It will be appreciated that there are many embodiments of apparatus which could be used in the manner described and that the method could be applied in many different situations; any number of pairs of wheels (or axles) could be adapted to bounce and move laterally in unison or sequentially. The pipes carrying the pressure and return fluid do not necessarily need to be concentric, two part-circle D shaped pipes could be used back-to-back if required, or the pressure and return lines could be attached to the bottom of the damper chamber, or to the damper cap. Another method of obstructing the large escape holes through the piston could be used. The foot of the telescopic strut could be covered with elastic material to grip the road surface or it could be a single spike or have many different shapes. The strut could contract against a compressed gas, or the strut could jack-knife at a hinge instead of contracting. Other methods of controlling the pressure fluid intermittently could be used, for instance a mechanical device in which a heavy weight confined in a vertical tube attached to the vehicles frame copies the vertical accelerations of the vehicle's body and makes electrical contacts as it does so.

There are many other ways of blocking the piston escape holes. For instance the thin walled elastic blocking tube which blocks the pressure fluid escaping upwards from the lower damper chamber to the upper damper chamber when the lower chamber is being pressurised in the parking mode can be replaced by a plastic, or other tube which fits neatly into the bore of the inner piston tube supported below by a coil spring and prevented from rising up the bore too far by a circlip within the bore of the inner piston pipe. The plastic tube should have a diaphragm which restricts the flow of the fluid down the bore so that when the lower chamber is being pressurised the tube moves down the bore to compress the coil spring, cover the escape holes, and stop fluid escaping from the lower to the upper chamber.

Similarly other ways may be used, instead of the cut-off sleeve, 71, described, to block the flow of the fluid escaping downward into the lower chamber when the upper chamber is being pressurised in the parking mode of operation.

There are many different ways of mounting the pairs of struts transversely on underside of the vehicle. They could be mounted with the pivots close together, astride the vehicle's longitudinal centre line, and the feet remote from the centre line; or with the feet close together, in the stowed position, astride the centre line and the pivots remote from it.

The restriction in the lower end of the elastic tube in the damper can be caused in many ways. The diameter of the tube can be reduced to a small opening to partially close the end, or the flow can be restricted by a mesh, or a grid, or any combination of restrictions.

Other hydraulic circuits can be used to attain the same objectives, and alternative suitable materials can be used where appropriate.

## Claims

1. A device to enable a vehicle which has at least two modes of operation, - a travel mode and a parking mode, to be moved horizontally sideways, and which said vehicle has bouncing means performing a first function of absorbing the vertical shocks as the said vehicle travels over a bumpy road surface in the travel mode of operation, horizontal thrust means (100), energising means (78, 80), and control means (89), characterised in that the bouncing means is achieved by adapting two or more of the vehicle's dampers (2) to perform a second function in the parking mode in addition to said damper's normal and first function, the bouncing being achieved by converting each affected damper into an hydraulic ram in the parking mode to give the vehicle upward acceleration in order to bounce at least two of the vehicle's wheels clear of the road surface.

2. A device as claimed in claim 1 in which the horizontal thrust means comprises one or more retractable struts (100) one end of which is pivotally secured (104) to the underside (102) of the vehicle.

3. A device as claimed in claim 1 in which the hydraulic ram is energised by the power of the vehicle's engine which drives a hydraulic pump (88) which forces fluid through the piston rod which is hollow.

4. A device as claimed in claim 1 in which the control means consists of one or more fluid control valves (89), which change the vehicle's dampers from one mode of operation to the other, and means to distribute hydraulic fluid sequentially and intermittently to the vehicle's dampers to produce the bounce cycle and to control the bounce height and the bounce rate.

5. A device as claimed in claim 1 in which the piston rod of the damper consists of two concentric pipes (50, 56) the bore and the annular cavity of which are used to convey hydraulic fluid into and out of the damper's upper (60) and lower (54) chambers.

6. A device as claimed in claim 5 which has blocking means (71, 55) which automatically prevents the upward flow of hydraulic fluid through the damper piston during the parking mode of operation.

7. A device as claimed in claim 2 in which each strut has collapsing means to shed load, and means to change the attitude of the strut between a horizontal attitude when retracted and an inclined attitude when deployed.

8. A device as claimed in claim 7 in which each strut is longitudinally telescopic and the collapsing means is a spring which contracts when the strut load reaches a critical value in the bounce cycle in order to shed load.

9. A device as claimed in claim 3 or claim 6 in which the hydraulic ram is double-acting and lifts the wheel as the vehicle descends in the bounce cycle in order to reduce the bounce height.

10. A device as claimed in claim 9 which has blocking means which automatically prevents the downward flow of hydraulic fluid through the damper piston during the parking mode of operation.

11. A device as claimed in claim 2 or claim 8 in which the strut pivot (104) can rotate horizontally around a vertical axis.

12. A device as claimed in claim 4 in which the means, to distribute the hydraulic fluid sequentially to the dampers, is twin, rotating, switch valves (146, 148) which are linked together by being on the same shaft which is rotated by a motor.

13. A device as claimed in claim 8 or claim 11 in which the remote end of the strut has means to grip the road surface to produce a horizontal thrust as the vehicle descends in the bounce cycle.

14. A device as claimed in claim 1 or claim 3 in which hydraulic energising fluid is fed through the top of the hollow piston rod of the damper to power the ram action, and cause vertical acceleration.

15. A vehicle damper as described in any preceding claim or claims which has a second function of acting as a hydraulic ram to cause the vehicle to bounce in the parking mode.

## Patentansprüche

1. Ein Gerät, daß die horizontale Seitwärtsbewegung eines Fahrzeuges, das über mindestens zwei Betriebsmoden - einen Fahrmodus und einen Parkmodus - verfügt, ermöglicht, wobei besagtes Fahrzeug über einen Federmechanismus verfügt, der die Erstfunktion erfüllt, vertikale Stöße beim Fahren des Fahrzeugs auf einer unebenen Straßendecke im Fahrmodus aufzufangen, sowie über einen horizontalen Schubmechanismus (100), eine Energiequelle (78, 80) sowie einen Steuermechanismus (89), wobei die Federfunktion durch eine derartige Adaptierung von zwei oder mehr Stoßdämpfern (2) des Fahrzeugs erzielt wird, daß diese im Parkmodus eine zweite Funktion, zusätzlich zu der normalen Erstfunktion des besagten Stoßdämpfers, erfüllen, wobei die Federung durch Umwandlung eines jeden betroffenen Stoßdämpfers im Parkmodus in einen Stoßheber erzielt wird, um dem Fahrzeug auf diese Weise eine aufwärts gerichtete Beschleunigung zu verleihen, im Ergebnis derer sich mindestens zwei Räder des Fahrzeugs beim Federn von der Straßenoberfläche abheben.

2. Ein wie in Anspruch 1 ausgeführtes Gerät, dessen horizontaler Schubmechanismus aus ein oder mehr einziehbaren Federbeinen (100) besteht, bei denen eine Endseite durch ein Drehgelenk (104) an der Fahrzeugunterseite (102) befestigt ist.

3. Ein wie in Anspruch 1 ausgeführtes Gerät, dessen Stoßheber durch den Fahrzeugmotor betrieben wird, der eine Hydraulikpumpe (88) antreibt, die Flüssigkeit durch die hohle Kolbenstange drückt.

4. Ein wie in Anspruch 1 ausgeführtes Gerät, dessen Steuermechanismus aus ein oder mehr Flüssigkeitssteuerventilen (89) besteht, die die Stoßdämpfer des Fahrzeugs von einem Betriebsmodus in den anderen überführen, mit einem Mechanismus zur sequentiellen und intermittierenden Zuführung der Hydraulikflüssigkeit an die Fahrzeugstoßdämpfer, um auf diese Weise den Federungszyklus zu erzeugen sowie die Federungshöhe und die Federungsrate zu steuern.

5. Ein wie in Anspruch 1 ausgeführtes Gerät, dessen Stoßdämpfer-Kolbenstange aus zwei konzentrischen Rohren (50, 55) besteht, deren Bohrlöcher und kreisförmige Hohlräume zur Zuleitung der Hydraulikflüssigkeit in die oberen (60) und unteren (54) Kammern des Stoßdämpfers und aus diesen heraus dienen.

6. Ein wie in Anspruch 5 ausgeführtes Gerät, das über einen Blockiermechanismus (71, 55) verfügt, der den Aufwärtsfluß der Hydraulikflüssigkeit durch den Dämpferkolben im Parkmodus automatisch verhindert.

7. Ein wie in Anspruch 2 ausgeführtes Gerät, bei dem ein jedes Federbein über einen Einziehmechnismus bei Entlastung verfügt, sowie einen Mechanismus, um die Ausrichtung des Federbeins zwischen einer Horizontalausrichtung bei Einziehung und geneigter Ausrichtung bei Ausfahrung zu ändern.

8. Ein wie in Anspruch 7 ausgeführtes Gerät, bei dem ein jedes Federbein longitudinal teleskopisch ist und der Einklappmechanismus aus einer Feder besteht, die zusammengedrückt wird, um dann eine Entlastung zu erzielen, wenn die Federbeinbelastung im Federungszyklus einen kritischen Wert erreicht.

9. Ein wie in Anspruch 3 bzw. Anspruch 6 ausgeführtes Gerät, dessen Stoßheber doppeltwirkend ist und das Rad anhebt, wenn sich das Fahrzeug im Federungszyklus zur Verringerung der Federungshöhe herunterbewegt.

10. Ein wie in Anspruch 9 ausgeführtes Gerät, das über einen Blockiermechanismus verfügt, der das Abwärtsfließen von Hydraulikflüssigkeit durch den Dämpferkolben im Parkmodus automatisch verhindert.

11. Ein wie in Anspruch 2 bzw. Anspruch 8 ausgeführtes Gerät, dessen Federbein-Drehgelenk (104) horizontal um eine vertikale Achse rotieren kann.

12. Ein wie in Anspruch 4 ausgeführtes Gerät, dessen Mechanismus zur sequentiellen Zuleitung der Hydraulikflüssigkeit an die Stoßdämpfer ein Doppelmechanismus ist, der rotiert und mit Schaltventilen (146, 148) ausgestattet ist, die dadurch miteinander verbunden sind, daß sie sich auf derselben Welle befinden, die durch einen Motor gedreht wird.

13. Ein wie in Anspruch 8 bzw. Anspruch 11 ausgeführtes Gerät, bei dem das entfernte Ende des Federbeins über einen Mechanismus zum Haften an der Straßendecke verfügt, um so einen Horizontalschub zu erzeugen, wenn sich das Fahrzeug im Federungszyklus herunterbewegt.

14. Ein wie in Anspruch 1 bzw. Anspruch 3 ausgeführtes Gerät, bei dem die zum Antrieb dienende Hydraulikflüssigkeit von oben in eine hohle Kolbenstange des Stoßdämpfers eingeleitet wird, im so die Stoßbewegung zu ermöglichen und eine vertikale Beschleunigung hervorzurufen.

15. Ein Fahrzeugstoßdämpfer der Art, wie er in einem beliebigen vorangegangenen Anspruch oder Ansprüchen beschrieben ist, und der über eine Zweitfunktion als Stoßheber verfügt und ein Federn des Fahrzeuges im Parkmodus bewirkt.

## Revendications

1. Un dispositif permettant à un véhicule pourvu de deux modes d'opérations , - mode déplacement et mode parking - , de se déplacer horizontalement et latéralement, le dit véhicule étant équipé d'un système de suspension exerçant, en mode déplacement, une première fonction d'amortissement des chocs verticaux dus à une surface de déplacement irrégulière, possédant également une source de poussée horizontale(100), un moyen d'excitation (78,80) et un système de contrôle (89), et dont l'une des caractéristiques est que le système de suspension consiste en deux ou plusieurs amortisseurs (2) pouvant aussi exercer une deuxième fonction en mode parking, l'amortissement étant obtenu en convertissant, en mode parking, chacun des amortisseurs en un bélier hydraulique qui donne au véhicule une accélération verticale ascendante afin de soulever au moins deux des roues pour ne plus toucher la surface de la route.

2. Un dispositif (revendication 1) où la source de poussée horizontale comprend une ou plusieurs jambes de force rétractables (100) dont l'extrémité se fixe par pivotement (104) au dessous (102) du véhicule.

3. Un dispositif (revendication 1) où le bélier hydraulique est activé par l'énergie du moteur qui entraîne une pompe hydraulique (88) et pousse le fluide à travers la bielle creuse du piston.

4. Un dispositif (revendication 1) où le système de contrôle consiste en une ou plusieurs valves hydrauliques de contrôle (89) qui font passer les amortisseurs du véhicule d'un mode d'opération à l'autre et leur distribuent le fluide hydraulique par intermittences séquentielles pour produire le cycle de rebondissements et en contrôler la hauteur et le taux de fréquence.

5. Un dispositif (revendication 1) où la bielle du piston de l'amortisseur consiste en deux tuyaux concentriques (50, 55) dont le tube intérieur et la cavité annulaire assurent la liaison hydraulique entre les chambres supérieures (60) et inférieures (54) des amortisseurs.

6. Un dispositif (revendication 5) muni d'un système de fermeture (71, 55) qui, en mode d'opération parking, empêche la montée du fluide hydraulique dans le piston de l'amortisseur.

7. Un dispositif (revendication 2) où chaque jambe de force peut se rétracter pour perdre sa charge et muni d'un système permettant de changer la disposition de la jambe de force, de la position horizontale lorsqu'elle est rétractée en position inclinée lorsqu'elle est déployée.

8. Un dispositif (revendication 7) où chaque jambe de force est longitudinalement télescopique et où le système de rétraction consiste en un ressort qui se comprime lorsque la charge qui lui est appliquée atteint une valeur critique du cycle de rebondissement afin de perdre de la charge.

9. Un dispositif (revendications 3 ou 6) où le bélier hydraulique joue un double rôle et soulève la roue du véhicule dans la phase descendante du cycle de rebondissement afin d'en réduire la hauteur de chute.

10. Un dispositif (revendication 9) muni d'un système de fermeture qui empêche automatiquement le flux descendant du fluide hydraulique dans le piston de l'amortisseur lorsqu'en mode d'opération parking

11. Un dispositif (revendications 2 ou 8) ou le pivot de la jambe de force (104) peut tourner horizontalement autour d'un axe vertical.

12. Un dispositif (revendication 4) où le système de distribution cyclique du fluide hydraulique vers les amortisseurs consiste en valves jumelles rotatives (146, 148) montées sur un même arbre entraîné par un moteur.

13. Un dispositif (revendications 8 ou 11) où l'extrémité de la jambe de force est munie d'un système lui permettant d'agripper la surface de la route pour produire une poussée horizontale au moment où le véhicule descend dans le cycle de rebondissement.

14. Un dispositif (revendications 1 ou 3) où le fluide hydraulique actif est alimenté à travers la bielle creuse du piston de l'amortisseur pour activer le bélier et provoquer ainsi une accélération verticale.

15. Un amortisseur de véhicule tel qu'il est décrit dans la ou les revendications précédentes, ayant aussi une fonction de bélier hydraulique permettant à ce véhicule de rebondir en mode d'opération parking.
